# EUROPEAN PATENT SPECIFICATION

(11) **EP 3 045 266 B1**
(45) Date of publication and mention of the grant of the patent: **24.04.2019**
(21) Application number: 16151000.3
(22) Date of filing: 13.01.2016
(51) Int. Cl.: B23Q 17/24

(54) **TOOL BLADE EDGE DETECTING METHOD, TOOL BLADE EDGE DETECTING DEVICE, AND TOOL CORRECTION VALUE REGISTERING DEVICE**
WERKZEUGBLATTKANTENERKENNUNGSVERFAHREN, WERKZEUGBLATTKANTENERKENNUNGSVORRICHTUNG UND WERKZEUGKORREKTURWERTREGISTRIERUNGSVORRICHTUNG
PROCÉDÉ DE DÉTECTION DE BORD DE LAME D'OUTIL, DISPOSITIF DE DÉTECTION DE BORD DE LAME D'OUTIL ET DISPOSITIF D'ENREGISTREMENT DE VALEUR DE CORRECTION D'OUTIL

(30) Priority: 15.01.2015 JP 2015006088
(43) Date of publication of application: 20.07.2016
(73) Proprietor: Nakamura-Tome Precision Industry Co., Ltd., Hakusan-shi, Ishikawa (JP)
(72) Inventor: NISHIMURA, Naotsugu, Hakusan-shi, Ishikawa (JP)
(74) Representative: Isarpatent

(56) References cited:
- EP-A1- 2 633 950
- EP-A1- 2 634 526
- EP-A1- 3 021 183
- JP-A- 2000 148 219
- US-A1- 2013 176 429

## Description

### TECHNICAL FIELD

The present invention relates to a machine tool with a tool post moving on a two-dimensional plane and a tool blade edge detecting device which detects a blade edge of a tool attached to the tool post, and a tool blade edge detecting method which is used in the tool blade edge detecting device.

### BACKGROUND ART

A shape of a work which is processed by a machine tool is determined by a positional relation between a blade edge of a tool and a work. Here, a controller is used to control a reference position (which is a position recognized by the controller and is generally a center of a tool installation station 17) of a tool post to which the tool is attached. In order to process the work in an accurate shape, data for all tools used to process the work needs to be registered in the controller in advance. The data indicates a positional relation (a difference in position) between the reference position of the tool post and the blade edge of the tool.

Here, when the tool is attached to the tool post or a tool magazine, an operator registers the positional relation (hereinafter, referred to as a "tool correction value") between the reference position of the tool post and the blade edge of the tool, the shape of the blade edge, and the type of the tool in the controller, and designates the tool by designating the registration number in a processing program so as to process the work.

For example, when a new tool is attached to a turret of a turret lathe, the operator registers a tool correction value by inputting the type of the tool and the number (which is generally a registration number) of the tool installation station having the tool attached thereto. Regarding the registration of the tool correction value, a tool setter having a detection sensor for detecting a blade edge of a tool is installed at a predetermined position, a tool is attached to a tool post, the tool post is moved so that the blade edge of the tool is detected by the detection sensor, and a tool correction value is obtained based on the position of the tool post when a detection signal is obtained.

In a NC lathe that processes a work in accordance with a procedure set in a processing program, the operation of the processing program is checked in a virtual space of a computer installed in a NC machine in order to detect whether the processing program is correctly described. Further, when the operation is checked, an interference check is performed in many cases in order to check a collision (interference) of the tool post or the tool with a work or a chuck holding the work in a processing state.

In order to check the interference, there is a need to register a shape of a member that may cause interference in a computer in advance. Accordingly, in the machine tool that performs the interference check, the shape of the tool, that is, the position or shape of the blade edge of the tool that easily causes interference with the other member needs to be registered in the controller whenever a new tool is attached to the tool post.

Many tools are attached to a tool post of a machine tool that processes a work having a complex shape. When the tool correction values or the tool shapes of many tools are manually registered, a considerably long time is needed, and the tool may be damaged due to an erroneous input. As a result, a problem arises in that the operator feels a large work burden.

In order to solve this problem, a method is considered in which the image of the tool is acquired by the camera provided inside the machine tool and the tool correction value or the tool shape is automatically registered by the analysis of the image. Patent Document 1 discloses a technique involved with a rotation tool of a machining center. Here, an outer diameter of a tool is calculated from an image of a camera provided inside the machining center, and a rotation speed of a tool shaft having the tool attached thereto is limited so as to prevent chips from being scattered by a centrifugal force.

US2013/0176429A1 discloses a machine tool and a method according to the preambles of claim 1 and claim 6 respectively.

### CITATION LIST

### PATENT DOCUMENT

Patent Document 1: JP 2000-24880 A

### DISCLOSURE OF THE INVENTION

### PROBLEM TO BE SOLVED BY THE INVENTION

When the position or shape of the blade edge of the tool is acquired from the image of the camera, the blade edge of the tool needs to appear on the image of the camera as a precondition. As disclosed in Patent Document 1, when the outer diameter of the rotation tool is detected, the position of the tool shaft having the tool attached thereto serves as the center of the tool. For this reason, an imaging operation may be performed while the tool shaft moves on the optical axis of the camera installed at a fixed position.

However, in a turret tool post of the lathe, the direction of the tool is different due to the type of the tool holder (which may be a straight holder or an angle holder) interposed between the tool and the turret. Further, a distance to the blade edge is short in a tool such as an outer diameter bite, and a distance to the blade edge is long in a tool such as a boring bite. In order that the entire blade edge of the tool appears on the image of the camera, the visual field (the imaging area) of the camera needs to be widened. However, if the position of the blade edge is located around the visual field even when the visual field is widened, the blade edge is imaged in the inclined direction, and the acquired image is distorted. And when the blade edge is located behind the shank of the bite, the position or shape of the blade edge cannot be accurately detected.

Further, since it is difficult to recognize a position where the blade edge appears on the image captured by the camera, an advanced image analysis is needed to detect the position or shape of the blade edge. As a result, a problem arises in that the position or shape of the blade edge is not accurately acquired by the imaging process.

The invention is made to solve such problems, and an object of the invention is to provide a technique capable of accurately detecting a position or a shape of a blade edge of each of various tools attached to a tool post or a tool magazine.

### MEANS FOR SOLVING PROBLEM

In the invention, a first image E1 is acquired by a camera 4 when a tool post 15 having a tool 2 attached thereto moves to a predetermined imaging reference position. When a position of a blade edge 21 obtained from the first image E1 is separated from a visual field center (an optical axis) c of the camera 4, the tool post 15 moves while the position of the tool post is corrected so that the blade edge 21 moves to the visual field center c of the camera. Desirably, an image (hereinafter, referred to as a "normal image") E2 in which the blade edge 21 is located at the visual field center c is acquired by a zoom-up function. Then, the position or shape of the blade edge 21 is detected by the analysis of the image for the acquired normal image E2.

A tool correction value can be calculated from the position of the blade edge 21 of the normal image E2 and the position of the tool post 15 when the normal image E2 is acquired. Further, the tool type or the tool shape used in the interference check can be acquired from the shape of the blade edge 21 of the tool.

The direction or the distance from the reference position of the tool post to the blade edge 21 of the tool is different depending on the type of the tool. For this reason, when the first image E1 is acquired, the visual field of the camera 4 needs to be widened so that the blade edge enters the visual field of the camera 4 even when any tool is attached to the tool post 15. Meanwhile, since the blade edge 21 of the tool is located at the visual field center when the normal image E2 is acquired, the visual field can be narrowed (for the zoom-up function).

Accordingly, a camera having an optical zoom function is used as the camera 4. Then, when the first image E1 is acquired while the visual field is widened and the normal image E2 is acquired in a zoom-up state, a high-resolution image can be obtained, and hence the position or shape of the blade edge 21 can be accurately detected.

In an image for the tool captured by the camera 4 provided inside the machine, a top surface of a bed or a protection cover for protecting the top surface appears as a background other than the image of the tool. Since such a background has metallic luster similarly to the tool, an advanced image analysis technique is needed in order to extract the image of the tool from the image. Thus, many mistakes occur in extraction.

This problem can be solved by removing the background while taking a difference sum of the image where the tool appears and the background image acquired in a state where the tool or the tool post is retracted from the visual field of the camera. An image which is captured in advance may be stored in the background image. However, since the background image may be different due to chips on the top surface of the bed or a change in external light, it is desirable to acquire the background image whenever the image of the tool is acquired.

When the tool post 15 is a turret tool post, an adjacent tool (a tool adjacent to a target tool) appears on the obtained image in addition to the target tool (the tool as a detection object) even when the background is removed. In a turret having a general structure, since the adjacent tool is attached to a position before and after the target tool when viewed from the camera, the adjacent tool overlapping the target tool appears on the obtained image. In this case, since the adjacent tool appears in a so-called defocused state while being deviated from the focus of the camera, it is possible to remove the image of the adjacent tool by distinguishing the target tool and the adjacent tool from a change in brightness of pixels in a contour portion of the tools on the image.

In this way, the tool correction value can be calculated from the position or shape of the blade edge 21 of the tool detected from the normal image E2 and the position of the tool post 15 when the normal image E2 is acquired. Further, the tool shape obtained from the acquired image of the tool can be used as tool shape data used in the interference check. Accordingly, a troublesome operation of registering the tool correction value or a troublesome operation of inputting the tool shape data used in the interference check can be automatically performed.

### EFFECT OF THE INVENTION

In the invention, when the blade edge of the target tool is separated from the visual field center of the camera in the image acquired at an imaging reference position as a predetermined fixed position, the tool post is automatically moved so that the blade edge moves to the visual field center of the camera to thereby acquire the normal image. Accordingly, it is possible to obtain an image in which the blade edge is located at the visual field center for various target tools.

For that reason, since the blade edge as the detection object is not located behind the tip holder, there is no need to worry a case where the blade edge cannot be detected or is erroneously detected. Further, since the shape of the blade edge is accurately captured, there is an effect that the tool blade edge position or the tool shape can be accurately measured.

Further, since the operator does not need to designate the position of the blade edge of the tool when the image of the tool is acquired, it is possible to drastically reduce the work burden of the operator when the tool correction value or the tool shape is registered.

### BRIEF DESCRIPTION OF DRAWINGS

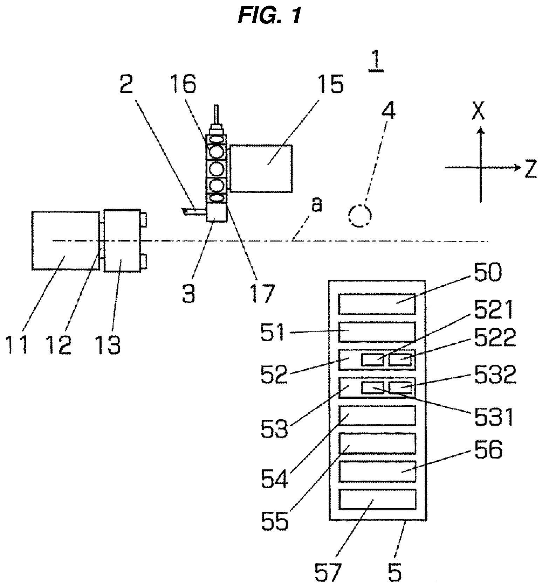

Fig. 1 is a block diagram of a NC turret lathe;
Fig. 2 is a diagram illustrating an example of a first image;
Fig. 3 is an explanatory diagram illustrating a case where a blade edge is detected in a magnified normal image;
Fig. 4 is an explanatory diagram illustrating an example of a background removing procedure;
Fig. 5 is an explanatory diagram illustrating an example in which a tool shape is detected; and
Fig. 6 is a flowchart of a blade edge detecting program.

### MODE(S) FOR CARRYING OUT THE INVENTION

Hereinafter, an embodiment of the invention will be described by exemplifying a NC turret lathe having a basic structure. The NC turret lathe includes a machine body 1 and a controller 5. The machine body 1 includes a main shaft 12 which is journaled to a main shaft headstock 11 fixed to a bed and a tool post 15. A chuck 13 which holds a work is attached to the front end of the main shaft 12.

The tool post 15 is a turret tool post with a turret 16, and a plurality of tools 2 is attached to the turret 16 through a tool holder 3. Based on the instruction from the controller 5, the tool post 15 is movably positioned in the Z-axis direction which is a direction of a main shaft axis a and the X-axis direction which is perpendicular thereto and moves close to and away from the main shaft axis a. The Z-X plane where the rotation indexing center of the turret 16 moves is a plane (an imaging plane of a camera 4) where the blade edge of the target tool moves.

At a position above the movement area of the tool post 15, the camera 4 is provided so as to be directed toward the optical axis in a direction perpendicular to the movement plane (the Z-X plane). The camera 4 is provided at a fixed position above the Z-X plane at the same accuracy as the tool post 15.

The controller 5 includes a blade edge detecting program 50, a positioning unit 51, an image acquiring unit 52, an image analyzing unit 53, a correction movement unit 54, a tool correction value registering unit 55, and a tool shape registering unit 56. The image acquiring unit 52 includes a background removing unit 521 and an adjacent tool removing unit 522. The image analyzing unit 53 includes a blade edge detecting unit 531 and a tool shape detecting unit 532.

When a positioning instruction is transmitted to the positioning unit 51, the positioning unit indexes a tool installation station 17 to which a tool 2 as a detection object is attached in a direction toward the main shaft axis a and moves the tool post 15 so that the tool post is positioned at a predetermined imaging reference position.

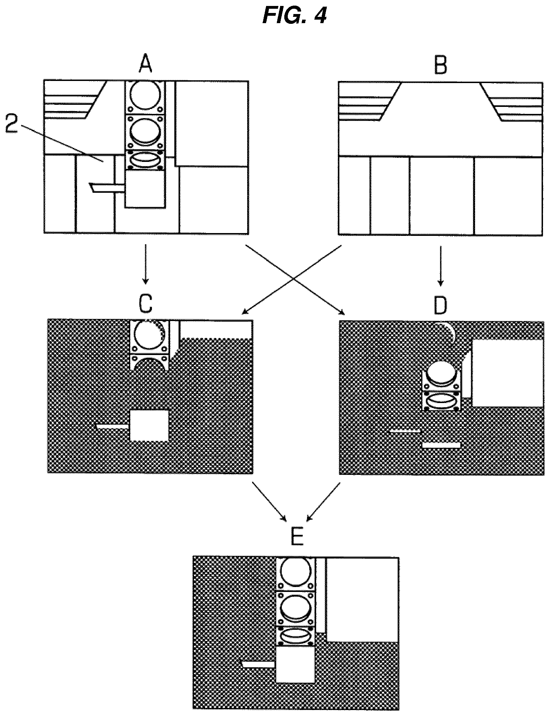

When an imaging instruction is transmitted to the image acquiring unit 52, the image acquiring unit causes the camera 4 to perform an imaging operation. As shown in Fig. 4, the background removing unit 521 creates an image E (E1 or E2) only for the tool post and the tool from which a background is removed by taking a difference sum of an image A where the tool appears and a background image B where the tool does not appear. That is, a difference image C is obtained by subtracting the brightness of the background image B from the brightness of the image A where the tool 2 appears, a difference image D is obtained by subtracting the brightness of the image A from the brightness of the background image B, and the image E from which the background is removed is acquired by synthesizing both difference images C and D.

The adjacent tool removing unit 522 detects an image of an adjacent tool located at a position deviated from an imaging plane by a blurring degree of a contour line of an image appearing on the image E where the background is removed and removes the image. Thus, it is possible to obtain an image for only the target tool, that is, the tool existing on the imaging plane of the camera 4. The image acquiring unit 52 transmits the tool image acquired by the above-described sequence to the image analyzing unit 53.

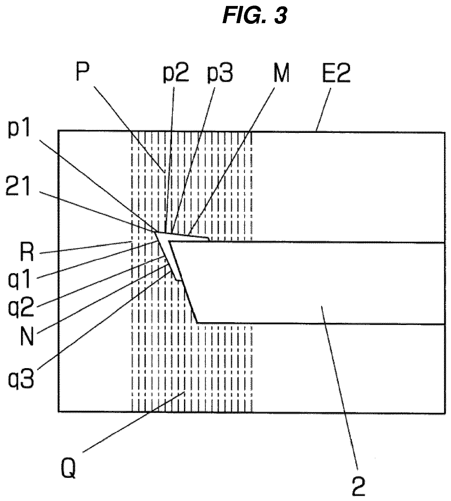

The blade edge detecting unit 531 of the image analyzing unit 53 detects the position of the blade edge of the target tool from the image E (E1 and E2) transmitted from the image acquiring unit 52. Specifically, for example, the image shown in Fig. 3 and including the tool is scanned by a scan line R in the X-axis direction while a value Z is increased. Then, when the image of the tool 2 is detected, the image is scanned by scan lines P and Q from the ±X-axis direction while the value Z is further increased. Subsequently, an equation of two lines M and N interposing the blade edge is obtained from the coordinates of the obtained plurality of tool detection positions p1, p2, p3 ..., q1, q2, q3... by least squares method, and the intersection is set as the position of the blade edge 21.

The correction movement unit 54 moves the tool post 15 while correcting the position of the tool post so that the position of the detected blade edge 21 moves to the center of the visual field of the camera 4, and magnifies the image of the blade edge 21 by the camera 4.

The tool shape detecting unit 532 plots the contour line of the image of the tool 2 by the scan lines at a narrow pitch from the detection of the blade edge, and obtains an equation of a line or a circular arc from the plurality of detection points to thereby detect a tool shape.

The tool correction value registering unit 55 calculates a tool correction value of the blade edge in the Z-axis direction and the X-axis direction from the position of the tool post 15 obtained when the normal image is acquired and the position of the blade edge detected by the image analyzing unit 53 in the Z-axis direction and the X-axis direction and registers the tool correction value in a tool correction value memory 57. The tool shape registering unit 56 registers the tool shape data acquired by the image analyzing unit 53 as a tool shape used by an interference check program in the NC machine.

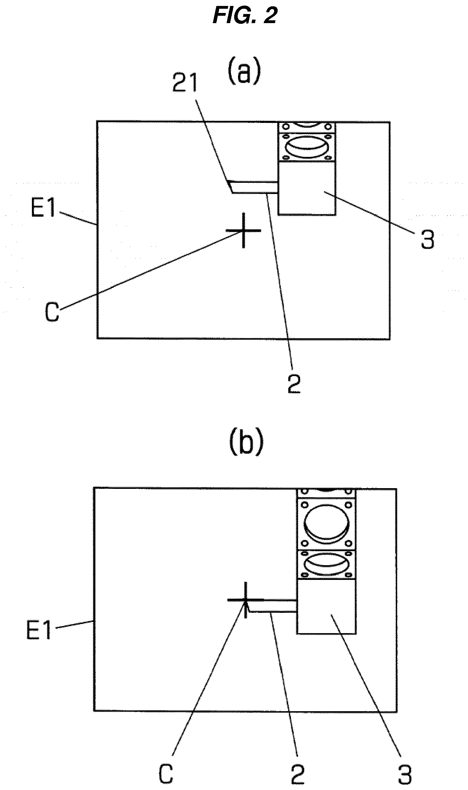

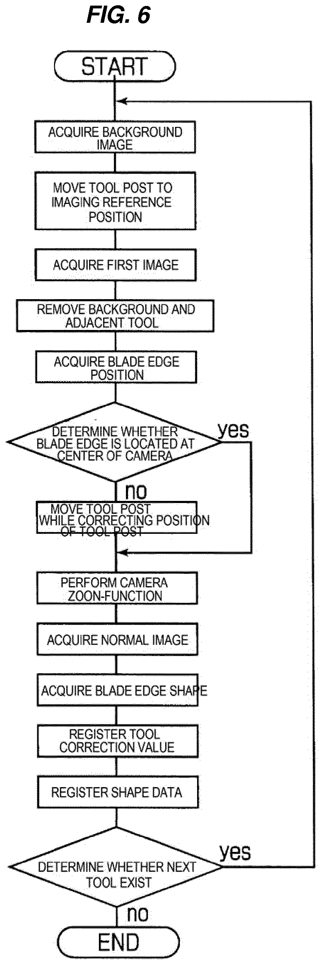

Next, a tool blade edge detecting method of the invention will be described with reference to a flowchart of Fig. 6. When the blade edge detecting program 50 is executed, the image acquiring unit 52 acquires the background image B while the tool post 15 is located outside of the visual field of the camera 4. Next, the positioning unit 51 moves the tool post 15 to the imaging reference position, and the image acquiring unit 52 causes the camera 4 to obtain the image A including the tool so as to acquire the first image E1 (Fig. 2(a) or Fig. 2(b)) from which the background and the adjacent tool are removed.

When the position of the blade edge of the first image E1 (Fig. 2(a)) is detected by the blade edge detecting unit 531, the correction movement unit 54 moves the tool post 15 so that the detected blade edge 21 is located at the visual field center c of the camera and magnifies the image by the camera 4. When the blade edge is located at the visual field center c of the first image E1 (Fig. 2(b)), the correction movement unit 54 performs only a zoom-up function of the camera. Subsequently, the image acquiring unit 52 acquires the normal image E2 from which the images of the background and the adjacent tool are removed.

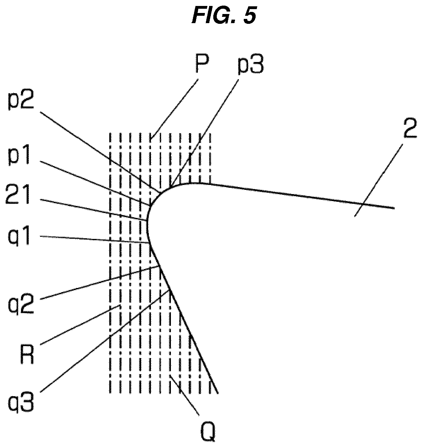

The tool shape detecting unit 532 of the image analyzing unit detects the shapes of the tool and the blade edge by plotting the points where the image of the tool 2 is detected by the scan lines in the Z-axis direction and the X-axis direction on the normal image E2. Fig. 5 illustrates only the scan lines P and Q in the X-axis direction, and the points p1, p2, p3 ... and q1, q2, q3 ... are points where the image of the tool 2 is detected by the scan line. The shape of the detected tool can be used as the shape of the tool used in the interference check program. Further, the tool correction value in each axis direction can be obtained by the calculation from the position of the blade edge of the tool in the Z-axis direction and the X-axis direction detected by the blade edge detecting unit 531 on the normal image E2 and the position of the tool post obtained when the normal image is obtained.

Then, the tool correction value registering unit 55 registers the obtained tool correction value in the tool correction value memory 57 of the controller 5. Further, the tool shape registering unit 56 registers the tool shape acquired by the image analyzing unit 53 as the tool shape used by the interference check program in a computer of the controller 5.

According to the invention, it is possible to accurately detect the position or shape of the blade edge of the tool attached to the tool post by the camera provided inside the machine tool. Further, it is possible to automatically register the tool correction value or the tool shape of the interference check program by detecting the position or shape of the blade edge of the tool attached to the tool post. Accordingly, a work burden on an operator can be drastically reduced. Also, a skill of the operator is not needed and a damage of a machine caused by an erroneous input can be prevented.

### EXPLANATIONS OF LETTERS OR NUMERALS

- 2:: tool
- 4:: camera
- 15:: tool post
- 21:: blade edge
- E1:: first image
- E2:: normal image
- C:: optical axis

## Claims

1. A machine tool with a tool blade edge detecting device, said tool blade edge detecting device comprising:
a camera (4) provided inside the machine tool (2),
an image acquiring unit (52) configured to acquire an image of a tool (2) attached to a tool post (15) by the camera (4);
a blade edge detecting unit (531) configured to acquire a position of a blade edge (21) of the tool (2) from a tool image acquired by the camera (4); and **characterized by**
a correction movement unit (54) configured to move the tool post (15) so that the position of the blade edge (21) acquired by the blade edge detecting unit (531) matches a visual field center of the camera (4),
wherein the correction movement unit (54) is configured to move the tool post (15), the image acquiring unit (52) is configured to acquire the image of the tool (2) as a normal image (E2) again, and the blade edge detecting unit (531) is configured to acquire the position of the blade edge (21) of the tool (2) from the normal image (E2).

2. The machine tool according to claim 1,
wherein the camera (4) is a camera (4) having an optical zoom function, and the image acquiring unit (52) acquires the normal image (E2) by a zoom-up function of the camera (4).

3. The machine tool according to claim 1 or 2, further comprising:
a tool shape detecting unit (532) configured to acquire tool shape data from the normal image (E2).

4. The machine tool according to any of claims 1 to 3, further comprising:
a tool correction value registering unit (55) configured to calculate a tool correction value in two orthogonal axis directions from the blade edge position detected by the tool blade edge detecting device and a reference position of the tool post (15) obtained when the image acquiring unit (52) acquires the normal image (E2) and to register the tool correction value in a controller (5).

5. The machine tool according to claim 3, further comprising:
a tool correction value registering unit (55) configured to calculate a tool correction value in two orthogonal axis directions from the blade edge position acquired by the tool blade edge detecting device and a reference position of the tool post (15) obtained when the image acquiring unit (52) acquires the normal image (E2) and to register the tool correction value in a controller (5); and
a tool shape registering unit (56) configured to register tool shape data acquired by the tool shape detecting unit (532) as tool shape data used for an interference check in the controller (5).

6. A tool blade edge detecting method in a machine tool, comprising:
installing a camera (4) inside a machine tool;
acquiring an image of a tool attached to a tool post (15) by a camera (4);
detecting a position of a blade edge (21) of the tool from the image;
**characterized by**
moving the tool post (15) while correcting the position of the tool post (15) so that the detected blade edge (21) is located at a visual field center of the camera (4);
acquiring an image of the tool by the camera (4) again; and
outputting blade edge position detection data from the image acquired again.

## Patentansprüche

1. Werkzeugmaschine mit einer Werkzeugklingenrand-Detektionsvorrichtung, wobei die Werkzeugklingenrand-Detektionsvorrichtung Folgendes umfasst:
eine Kamera (4), die im Inneren der Werkzeugmaschine (2) angeordnet ist,
eine Bildaufnahmeeinheit (52), die dafür ausgestaltet ist, mit der Kamera (4) ein Bild eines Werkzeugs (2) aufzunehmen, das an einer Werkzeugsäule (15) angebracht ist;
eine Klingenrand-Detektionseinheit (531), die dafür ausgestaltet ist, eine Position eines Klingenrandes (21) des Werkzeugs (2) aus einem durch die Kamera (4) aufgenommenen Werkzeugbild zu erfassen; und
**gekennzeichnet durch**
eine Korrekturbewegungseinheit (54), die dafür ausgestaltet ist, die Werkzeugsäule (15) so zu bewegen, dass die Position des durch die Klingenrand-Detektionseinheit (531) erfassten Klingenrandes (21) mit einer Sichtfeldmitte der Kamera (4) übereinstimmt,
wobei die Korrekturbewegungseinheit (54) dafür ausgestaltet ist, die Werkzeugsäule (15) zu bewegen, die Bildaufnahmeeinheit (52) dafür ausgestaltet ist, das Bild des Werkzeugs (2) erneut als ein normales Bild (E2) aufzunehmen, und die Klingenrand-Detektionseinheit (531) dafür ausgestaltet ist, die Position des Klingenrandes (21) des Werkzeugs (2) aus dem normalen Bild (E2) zu erfassen.

2. Werkzeugmaschine nach Anspruch 1, wobei die Kamera (4) eine Kamera (4) ist, die eine optische Zoomfunktion besitzt, und die Bildaufnahmeeinheit (52) das normale Bild (E2) durch eine Heranzoom-Funktion der Kamera (4) aufnimmt.

3. Werkzeugmaschine nach Anspruch 1 oder 2, des Weiteren Folgendes umfassend:
eine Werkzeugform-Detektionseinheit (532), die dafür ausgestaltet ist, Werkzeugformdaten aus dem normalen Bild (E2) zu erfassen.

4. Werkzeugmaschine nach einem der Ansprüche 1 bis 3, des Weiteren Folgendes umfassend:
eine Werkzeugkorrekturwertregistrierungseinheit (55), die dafür ausgestaltet ist, einen Werkzeugkorrekturwert in zwei orthogonalen Achsenrichtungen anhand der durch die Werkzeugklingenrand-Detektionsvorrichtung detektierten Klingenrandposition und einer Referenzposition der Werkzeugsäule (15) zu berechnen, die erhalten wird, wenn die Bildaufnahmeeinheit (52) das normale Bild (E2) aufnimmt, und den Werkzeugkorrekturwert in einer Steuereinheit (5) zu registrieren.

5. Werkzeugmaschine nach Anspruch 3, des Weiteren Folgendes umfassend:
eine Werkzeugkorrekturwertregistrierungseinheit (55), die dafür ausgestaltet ist, einen Werkzeugkorrekturwert in zwei orthogonalen Achsenrichtungen anhand der durch die Werkzeugklingenrand-Detektionsvorrichtung detektierten Klingenrandposition und einer Referenzposition der Werkzeugsäule (15) zu berechnen, die erhalten wird, wenn die Bildaufnahmeeinheit (52) das normale Bild (E2) aufnimmt, und den Werkzeugkorrekturwert in einer Steuereinheit (5) zu registrieren; und
eine Werkzeugformregistrierungseinheit (56), die dafür ausgestaltet ist, Werkzeugformdaten, die durch die Werkzeugform-Detektionseinheit (532) erfasst wurden, als Werkzeugformdaten zu registrieren, die für eine Interferenzüberprüfung in der Steuereinheit (5) verwendet werden.

6. Werkzeugklingenrand-Detektionsverfahren in einer Werkzeugmaschine, umfassend:
Installieren einer Kamera (4) im Inneren einer Werkzeugmaschine;
Aufnehmen eines Bildes eines an einer Werkzeugsäule (15) angebrachten Werkzeugs mit einer Kamera (4);
Detektieren einer Position eines Klingenrandes (21) des Werkzeugs anhand des Bildes;
**gekennzeichnet durch**
Bewegen der Werkzeugsäule (15) während des Korrigierens der Position des Werkzeugpfostens (15) dergestalt, dass sich der detektierte Klingenrand (21) in einer Sichtfeldmitte der Kamera (4) befindet;
erneutes Aufnehmen eines Bildes des Werkzeugs mit der Kamera (4); und
Ausgeben von Klingenrandpositionsdetektionsdaten anhand des erneut aufgenommenen Bildes.

## Revendications

1. Machine-outil dotée d'un dispositif de détection de bord de lame d'outil, ledit dispositif de détection de bord de lame d'outil comprenant :
une caméra (4) prévue à l'intérieur de la machine-outil (2), une unité d'acquisition d'image (52) configurée pour acquérir une image d'un outil (2) fixé à un porte-outil (15) par la caméra (4) ;
une unité de détection de bord de lame (531) configurée pour acquérir une position d'un bord de lame (21) de l'outil (2) à partir d'une image d'outil acquise par la caméra (4) ; et
**caractérisée par**
une unité de déplacement de correction (54) configurée pour déplacer le porte-outil (15) afin que la position du bord de lame (21) acquise par l'unité de détection de bord de lame (531) corresponde à un centre du champ de vision de la caméra (4),
l'unité de déplacement de correction (54) étant configurée pour déplacer le porte-outil (15), l'unité d'acquisition d'image (52) étant configurée pour acquérir à nouveau l'image de l'outil (2) comme une image normale (E2) et l'unité de détection de bord de lame (531) étant configurée pour acquérir la position du bord de lame (21) de l'outil (2) à partir de l'image normale (E2).

2. Machine-outil selon la revendication 1,
dans laquelle la caméra (4) est une caméra (4) ayant une fonction de zoom optique et l'unité d'acquisition d'image (52) acquiert l'image normale (E2) au moyen d'une fonction de zoom avant de la caméra (4).

3. Machine-outil selon la revendication 1 ou 2, comprenant en outre :
une unité de détection de forme d'outil (532) configurée pour acquérir des données de forme d'outil à partir de l'image normale (E2).

4. Machine-outil selon l'une quelconque des revendications 1 à 3, comprenant en outre :
une unité d'enregistrement de valeur de correction d'outil (55) configurée pour calculer une valeur de correction d'outil dans deux directions d'axe orthogonales à partir de la position de bord de lame détectée par le dispositif de détection de bord de lame d'outil et d'une position de référence du porte-outil (15) obtenue lorsque l'unité d'acquisition d'image (52) acquiert l'image normale (E2) et pour enregistrer la valeur de correction d'outil dans un dispositif de commande (5).

5. Machine-outil selon la revendication 3, comprenant en outre :
une unité d'enregistrement de valeur de correction d'outil (55) configurée pour calculer une valeur de correction d'outil dans deux directions d'axe orthogonales à partir de la position de bord de lame acquise par le dispositif de détection de bord de lame d'outil et d'une position de référence du porte-outil (15) obtenue lorsque l'unité d'acquisition d'image (52) acquiert l'image normale (E2) et pour enregistrer la valeur de correction d'outil dans un dispositif de commande (5) ; et
une unité d'enregistrement de forme d'outil (56) configurée pour enregistrer des données de forme d'outil acquises par l'unité de détection de forme d'outil (532) en tant que données de forme d'outil utilisées pour un contrôle d'interférence dans le dispositif de commande (5).

6. Procédé de détection de bord de lame d'outil dans une machine-outil, comprenant les étapes consistant à :
installer une caméra (4) à l'intérieur d'une machine-outil ;
acquérir une image d'un outil fixé à un porte-outil (15) par une caméra (4) ;
détecter une position d'un bord de lame (21) de l'outil à partir de l'image,
**caractérisé par** les étapes consistant à
déplacer le porte-outil (15) en corrigeant la position du porte-outil (15) de telle sorte que le bord de lame détecté (21) soit situé à un centre du champ de vision de la caméra (4) ;
acquérir à nouveau une image de l'outil par la caméra (4) ; et
délivrer des données de détection de position de bord de lame à partir de l'image acquise à nouveau.
